Europäisches Patentamt

European Patent Office

Office européen des brevets

(19)

(11) Publication number: **0 126 575**
**A2**

(12) **EUROPEAN PATENT APPLICATION**

(21) Application number: **84303058.6**

(22) Date of filing: **08.05.84**

(51) Int. Cl.³: **B 65 D 8/22**

(30) Priority: **09.05.83 US 492764**
**09.05.83 US 492928**

(43) Date of publication of application: **28.11.84**
**Bulletin 84/48**

(84) Designated Contracting States: **DE GB NL**

(71) Applicant: **COSDEN TECHNOLOGY INC., P.O. Box 410,**
**Dallas Texas 75221 (US)**

(72) Inventor: **MacLaughlin, Donald N., 5705 Lamplighter**
**Drive, Midland Michigan 48620 (US)**
Inventor: **Hahn, Granville J., 705 Avondale, Big Spring**
**Texas 79720 (US)**
Inventor: **Fortuna, Vincent E., 16414 La Dona Circle,**
**Huntingdon Beach California 92649 (US)**

(74) Representative: **Abbie, Andrew Kenneth et al, A.A.**
**THORNTON & CO. Northumberland House 303/306 High**
**Holborn, London, WC1V 7LE (GB)**

(54) **Friction-welded barriered containers.**

(57) The present invention discloses containers manufactured from thermoplastic barriered polymeric materials forming multiple container components which are spinwelded together to form a final container.

- 1 -

## FRICTION-WELDED BARRIERED CAN

## BACKGROUND OF THE INVENTION

The present invention generally relates to thermoplastic containers and more particularly involves plastic containers manufactured from multiple components. Conventional containers generally involve metals, glass, or composite paper materials formed into container shapes. Other conventional containers involve the forming of plastics into container shapes. The present invention is directed towards the area of technology relating to plastics and more particular to polymers such as polyesters and polyolefins. The containers made by the processes herein disclosed replace those manufactured by conventional plastic forming techniques as well as those of glass, metal, and paper.

In conventional plastic bottle manufacturing, a bottle may be formed by one of several methods. One such method is to make a pre-form or "parison" by injection molding a molten plastic material into a parison mold and allowing it to solidify. This parison is then placed in a blow molding apparatus which utilizes a combination of heat, air pressure and mechanical stretching means to expand the parison into a finished bottle. Generally this two or three step process is very lengthy and expensive due to the time and equipment required in its manufacture as well as the large amount of energy input into the polymer. The melting of the polymer to injection-mold the parison, with a subsequent cooling down, and then a required reheating to blow mold requires a large amount of heat input.

An alternative method of manufacturing plastic containers is in the straight injection molding technique where the finished bottle design is formed in a single mold and liquid molten polymer is injected straight into the mold to form a finished bottle. This design, while eliminating the dual heat input of the parison process, suffers from the disadvantage that no orientation of the polymer is obtained and the resulting bottle is structurally weak. Also, because of the lack of orientation in the polymer there is a low barrier to the ingress of oxygen and the egress of $CO_2$.

A third means of forming thermoplastic containers is to extrude a tubular parison and, while the tubular parison is still in a melted state, enclosing the parison in a mold and blow molding it into a final bottle. This suffers from the disadvantages that very little orientation is achieved in the bottle and the bottle also has weakened areas in the bottom section where the seam is formed during the blow molding process.

On the other hand, the manufacture of cans by conventional techniques is considerably different than the conventional manufacture of bottles. Cans are primarily made of paperboard with either metal or plastic ends crimped on or glued on. The paperboard cyclindrical bodies of cans are usually "spiral-wound" using a helically wound strip of paperboard, and then the metal or plastic bottoms and tops are placed on the bodies before and after filling, respectively.

One improved method of manufacturing cans is disclosed in the following copending applications to Vincent Fortuna et al.: S.N. 405,642, filed August 5, 1982, for "Thermoplastic Container End and Method and Apparatus for Inertial Spinwelding of Thermoplastic Container Ends"; and S.N. 415,126, filed September 17, 1982, for "Inertial Spinwelding of Thermoplastic and Thermoplastic Coated Container Parts". In these copending applications, oil can bottoms are spin-welded onto spiral-wound paperboard bodies.

The disadvantages of the prior art methods of can manufacturing is that the can bodies, whether they are seamed metal tubes or spiral-wound paperboard tubes, are made by a process that is long and expensive. Also both the crimped metal tube and the spiral-wound tube are subject to leaking. In addition, the paperboard can usually must be coated interiorly to prevent seepage through the wall of liquid material. Even coated paperboard cans suffer a further disadvantage of "wicking" where the canned fluid enters the paperboard at the edge around the bottom and syphons up into the wall of the can, eventually leaking out through the label.

Another type of conventional can is the drawn aluminum beverage can made of pure aluminum. Although this type of can is seamless at the bottom and sides, the top

4

must be crimped to the body. Also, the use of aluminum is becoming prohibitively expensive, and the use of aluminum requires large expenditures of energy to form the aluminum into sheets and to draw the can from the sheet. The tops must be of relatively thick material which has to be scored and have a pull-tab mechanically fused thereto by welding or other means. This too is very expensive.

## SUMMARY OF THE INVENTION

The present invention overcomes the disadvantages of the prior art thermoplastic bottles and cans by forming such containers from separate components which may be each formed in the most economical manner available, and yet each obtains the greatest advantages of its thermoforming process. The components are joined into a single, strong, esthic container by spinwelding. In one mode of the invention, a container is formed by thermoforming a top closure having a peripheral friction-welding flange and a scored pull-tab section, thermoforming a bottom section having nesting characteristics, and extruding a cylindrical body portion to which the upper and lower sections are friction-welded.

## BRIEF DESCRIPTION OF THE DRAWINGS

Figure 1 is a partial cross-sectional side view of a container according to the present invention.

Figure 2 is an enlarged cross-sectional side view of the top portion of the container of Figure 1.

5

Figure 3 is an enlarged cross-sectional side view of a bottom section of a container.

Figure 4 is an enlarged cross-sectional top view of the drive lug ring of the top section of Figure 2.

Figure 5 is a cross-sectional side view of a container bottom stacked on a container top.

Figure 6 is an enlarged partial cross-section of a portion of container sidewall.

Figure 7 is a partial cross-sectional side view of an alternate, preferred embodiment of the container of this invention.

## DESCRIPTION OF THE PREFERRED EMBODIMENTS

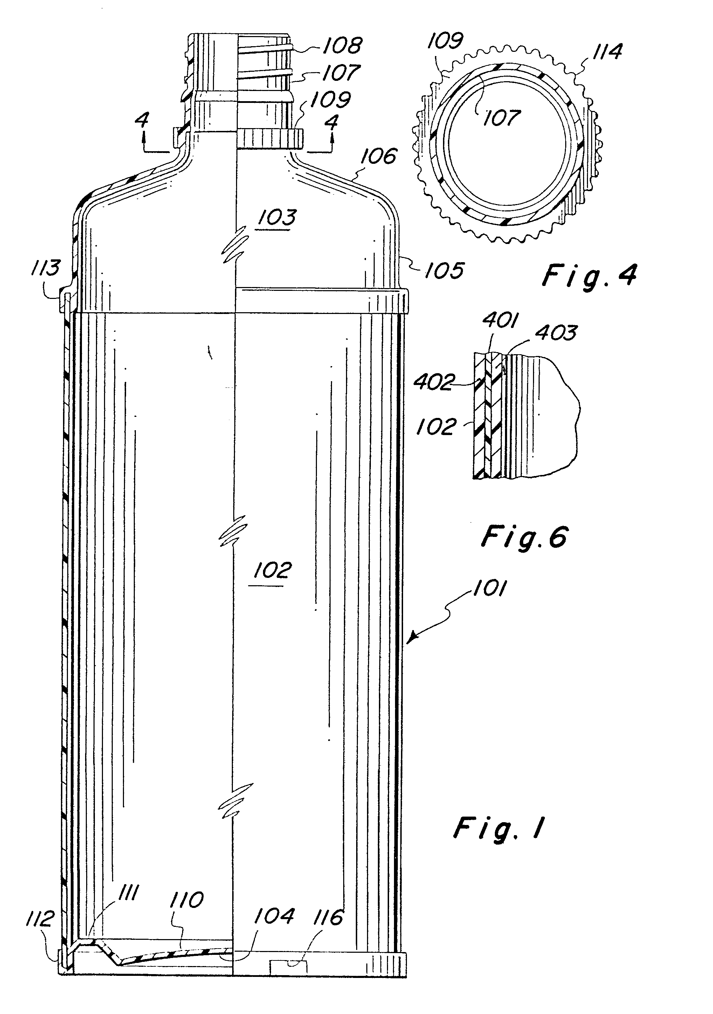

Referring now to Figure 1, a container in the shape of a bottle 101 is shown in partial cross-sectional side view. Bottle 101 comprises a generally cylindrical center portion 102 formed in the shape of a cylindrical tube, which has joined thereto an upper bottle or top portion 103, and a lower closure or bottom section 104. Upper section 103 generally consists of a slightly tapered generally cylindrical skirt section 105, an inwardly necked shoulder section 106, and an upper threaded cylindrical neck portion 107 having helical cap threads 108 formed thereon. A dual purpose ring 109 is formed around neck section 107 and projects radially outward therefrom.  The purpose of ring 109 is to provide a fill ring to suspend the bottle from the filling machine during placing of the contents into the bottle.  Ring 109 also contains a set of peripheral drive lugs formed thereon for allowing engagement of the top section in a spinwelding mandrel.

Center section 101 is a generally cylindrical tubular section preferably formed by coextrusion into the finished shape.  The cylinder is cut by means such as a hot knife or a water laser to length to form the desired capacity bottle. Although the embodiment illustrated in Figure 1 shows the wall section of center body portion 102 to be made up of a single layer of polymer plastic, in the preferred embodiment of the invention a cylindrical body section 102 was formed by coextrusion through a cylindrical coextrusion die into a multi-layered cylindrical body portion.  Preferably the layers of polymer utilized numbered either three or five in number and comprised FDA approved polymer inner and outer layers and a central barrier layer formed of a known barrier polymer such as ethylene vinyl alcohol (EVAL) to prevent the intrusion of oxygen and the loss of carbon dioxide from the container through the wall thereof.  In addition, there may be additional layers between the barrier layer and the outer and inner layers, of a material such as CXA which is an adhesive for bonding the polymer to the barrier.  CXA is an adhesive manufactured by duPont Chemical Company.

Bottom member 104 comprises a generally circular diaphragm type closure member having a relatively flexible center portion 110, a diaphragm 111, and an upwardly facing U-shaped spinwelding flange 112 around the circumference. It should be noted that upper portion 105 likewise has a downwardly facing U-shaped spinwelding flange 113 similar to the upward-facing flange 112 of bottom member 104. The U-shaped flanges 112 and 113 are sized for receiving in tight-fitting engagement therein the cylindrical body portion 102 of the container. It may be preferred that an interference fit be arranged between the flange areas 112 and 113 and the cylindrical body section 102. This will provide heat of fusion when the three container sections are joined together by spinwelding. As previously mentioned, the container 101 is manufactured from a polymer selected from one of the polyesters or polyolefins. More particularly in one embodiment thereof, the container 101 was manufactured from polyethylene terephthalate (PET). This material has been accepted by the FDA for food and beverage products and is particularly advantageous for containers due to its clarity, strength, and barrier properties. Also PET is particularly responsive to strengthening by the mode of orienting the structure at its orientation temperatures by stretching the polymer.

The central body section 101 preferably is formed of a coextruded multi-layered tube formed by circular coextrusion dies. In one preferred embodiment, five layers of polymer may be coextruded into a cylindrical tube. The exterior layer would be PET then a layer of adhesive, then a layer of a barrier material such as Saran, Barex, or EVAL, would be utilized. Then would follow a layer of adhesive and a final interior layer of PET. These materials can be coextruded simultaneously into a single

8

multi-layered cylindrical tube by the use of spiderless dies disclosed in U. S. Patent 4,249,875 issued February 10, 1981, to Hart and Rutledge, for "Co-extrusion Apparatus and Method for Producing Multi-Layered Thermoplastic Pipe", assigned to the assignee of the present invention. Said patent is hereby incorporated by reference into the present application.

Referring to Figure 4, a cross-sectional axial view of the top portion of bottle 101 taken at line 4-4 of Figure 1 is illustrated to more particularly disclose the structure of the corrugated fill ring 109. In Figure 4, neck portion 107 is shown in cross-section and to which is integrally attached a peripheral fill ring 109. Fill ring 109 projects outwardly from the surface of 107 a substantial distance. A set of symmetrical spinwelding lugs 114 are formed on the external circumference of ring 109 and project radially outward therefrom. Lugs 114 are particularly adapted for engagement with a spinwelding mandrel for applying spinning motion to top portion 105.

A slot 116 is cut through the wall of flange 112 and the lower extremity of wall 102. This is cut in the bottom rim of the container as a locator slot for the printing of a label on the container and to insure that when the container is located in the secondary package, i.e. "six pack", that the preferred area of the label will be located in an outwardly-facing direction. This is an extremely important marketing aspect for the marketer who is filling the packages and selling them under his trademark. For example, beverage manufacturers are very interested in having each container in the package with the major portion of the trademark or logo facing outward so that when the package is located in a supermarket the eye-catching characteristics of the label are visible to the consumer. Thus the cutting of notch 116 in the lower edge of the container allows the filler to place the label in such a manner that when the filled container is placed into the standard six pack the notch can be used to orient the container during packaging so that the eye-catching portion of the logo faces outward in the package.

Alternatively a locator means such as a lug or protruding knob can be formed in the top section 103 rather than the notch 116 in lower skirt 112. A projection or lug could also be formed inside of trough 111 of bottom 104 which would not be visible from the side or top of container 101. This particular embodiment of the locator means 116 is the preferred mode because of secondary packaging concerns. The slot 116 allows easy orientation of the bottle by a projecting lug in the secondary package which can engage the slot and provide orientation of the bottle on retail display. Also, engagement of a locator arm in slot 116 can provide additional support for the container in the package.

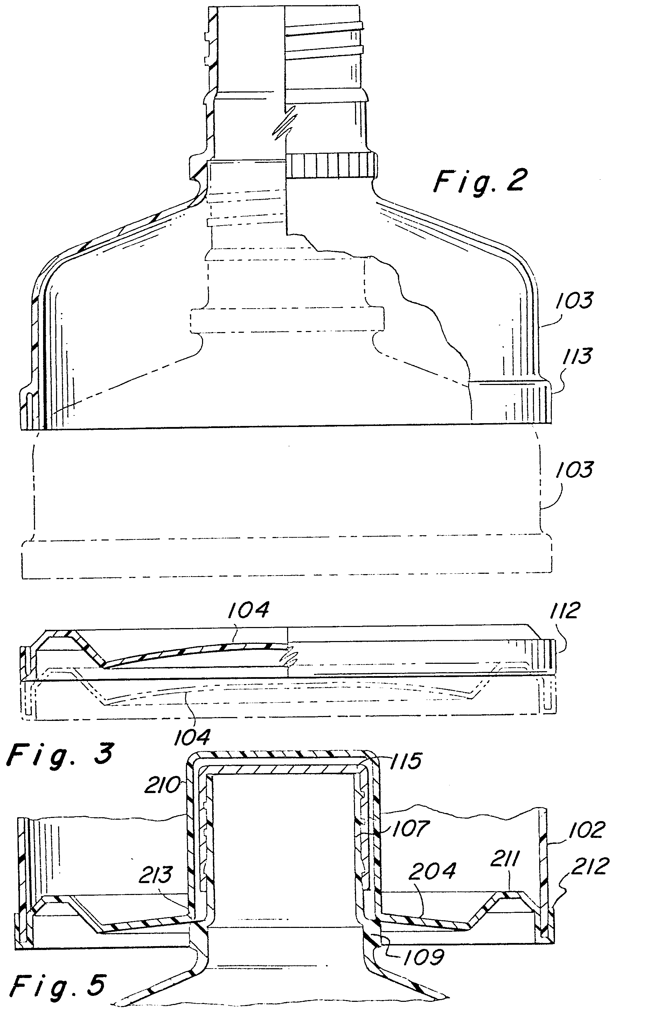

Figure 2 illustrates a view of the upper portion 105 of the three-piece container before it is joined to the central body section 102. This view illustrates the nestability of the top sections 105. In Figure 2, a second top portion 105 is drawn in phantom lines to indicate the nestability of the top portions with respect to each other. This is particularly important in the manufacture of containers on a large scale. Many containers must be manufactured at one location and shipped to another location for filling. In the case of conventional PET bottles in the one- and two-liter sizes these are generally formed in a single piece and shipped empty to their final filling point. Normally a truck or railroad car loaded to capacity with single-piece bottles will be shipping only about 1/20th of its normal shipping weight although its entire shipping volume is filled with empty containers. Thus the shipper is paying mainly for the shipment of air. By utilizing the present invention the shipper can ship components of bottles nested as shown in Figures 2 and 3 and can greatly increase the efficiency of the shipping. Figure 3 illustrates the nestability of the bottom sections 104 by showing a bottom section 104 in partial cross-sectional view and an additional bottom section 104 illustrated in phantom in nested position therein.

In Figure 2 one can see the savings in shipping space achieved by utilizing the present invention. Considering the distance that the phantom representaiton 105 projects outwardly from the solid representation 105, it can be seen that the top portion occupies an additional space only about one-third that of the original space occupied by the top portion. Thus the bottle manufacturer can ship a large number of top portions 105 nested together and save approximately two-thirds of the normal shipping space. Likewise, the bottom portions 104 can be nested to achieve additional space saving.

In addition to the nestability of the top and bottom sections, the use of a coextruded cylinder for the central section of the container allows the bottle manufacturer and filler to manufacture the center portion 102 at the filling site thereby saving the shipping cost for the cylindrical tubes. Thus, for the center sections, the shipper must only ship bulk polymer pellets which are very efficient as far as space usage is concerned and which are then easily converted into cylindrical tubes by cylindrical extrusion at the fill site.

Thus the present design for containers offers the tremendous advantage of greatly reduced shipping costs for empty containers as well as the improvements in strength, barriers, and other characteristics of the finished container arising from the spinwelded construction.

Figure 5 illustrates an alternate embodiment of bottom portion 104 of the three piece container. In Figure 5 a bottom section 204 is formed having the peripheral U-shaped spinwelding flange 212 formed therearound and a flex section 211 located inward from flange 212. The central section 210 comprises a cylindrical, raised, cap-receptacle section 210 adapted to receive the upper neck portion 107 of the bottle top below it. Neck portion 107 has a cap 115 threadedly attached thereon. The lower shoulder portion 213 of receptacle portion 210 is sized for abutting engagement with fill ring 109 of a bottle located below it. Thus the receptacle 210 formed in bottom 204 allows the filled containers to be placed on the storage shelf or the showroom shelf in a stacked orientation which is stable and attractive to display the products.

One disadvantage of prior art containers such as glass bottles and parison type plastic bottles is that they are highly unstable and cannot be stacked without the placement of stack sheets between each layer of containers. Thus when the retailer such as a supermarket owner wishes to display multi-layered stacks of the products, expensive and time consuming stack sheets must be placed between each layer of containers. With the present invention, utilizing the cylindrical bottle receptacle 210 in the bottom of each container, the neck portion 107 containing a cap 115 can project upwardly into the bottom of a filled container and the weight of the filled container can be borne by the heavy, strong fill ring 109 of the container immediately thereunder.

Although the top portions 103 and bottom portions 104 and 204 may be formed by conventional means such as injection molding, it should be appreciated that more innovative means for forming these sections can be utilized. For instance, in copending patent application serial number 394,382, filed July 1, 1982 by Granville J. Hahn, et al, entitled "Apparatus for Forming Biaxially Oriented Thermoplastic Articles" which is assigned to the assignee of present application, apparatus for thermoforming articles such as tops and bottoms of containers is disclosed. This apparatus is particularly advantageous for use in the present invention because of the benefits gained through these thermoforming techniques and apparatus. In the Hahn, et al. application, either single sheet or multi-layered sheet polymer is heated to a temperature above the orientation temperature and a medium pressure air supply is applied to the sheet material forcing it down on to a pre-form mold thereby creating a parison. A certain amount of cooling occurs on the pre-form and the polymer is reduced in temperature into its orientation range.  At this time, a high pressure surge of air flows through the pre-form mold and forces the sheet up into its final configuration in the final mold thereupon simultaneously forming the finished article and stretching the article an optimal amount to obtain biaxial orientation.  The use of the Hahn apparatus would provide tops and bottoms to the present container which are sufficiently oriented to obtain optimum strength and barrier characteristics.  Also by utilizing the Hahn apparatus, as opposed to a conventional injection molding technique, one can gain additional strength through orientation that cannot be achieved in the injection molding system.  Also, one can utilize coextruded sheet material to obtain a multi-layered top or bottom comprising a barrier layer polymer sandwiched between two layers of regular container polymer such as PET.  The aforementioned Hahn, et al. patent application, S.N. 394,382, is hereby incorporated by reference in its entirety into the present application.

In typical operation, a beverage or other type of container is formed by utilizing the three sections disclosed in Figures 2 through 5.  More particularly, a top section 105 which has been formed by injection molding or by solid phase pressure forming (thermal forming), having a downwardly shaped spinwelding flange 113 formed thereon is placed into a spinwelding mandrel.  A cylindrical wall section 102 which has been formed by means such as extrusion is placed in the central mandrel of the spinwelding apparatus.  A bottom portion 104 or 204 having

14

an upwardly shaped spinwelding flange 112 is placed in the lower spinwelding mandrel. Preferably the central spinwelding mandrel containing the central body section is a stationery mandrel and the upper and lower mandrels are adapted for spinning operation. After the three container sections are situated in their respective mandrels the upper and lower mandrels have rotational energy imparted thereto to cause them to spin rapdily with respect to the central mandrel. While the upper and lower mandrels can be rotated in the same direction, preferably they will be rotated in opposite directions to offset the torque of each other. After reaching a preselected rotational speed which is selected based upon the particular polymer used and the amount of interference fit in the spinwleding flanges 112 and 113, the top and bottom sections are brought into rapid engagment with the central section, forcing the walls of the central section into the U-shaped flanges and causing the plastic therein to temporarily melt and fuse together. This forms a tight, clean, hermetically sealed joint in flanges 112 and 113 and a strong joint formed therein.

In addition to the hoop strength gained through the spinwelded joints at 112 and 113, which hoop strength greatly contributes to the overall strength of the container, the radially outwardly projecting shoulders resulting from flanges 112 and 113, provide a protected label area for the finished container. Generally these projecting shoulders at 112 and 113 can be refered to as "roll rings". When a label is applied to central body section 101 such as a glued label or a printed label

15

directly on section 102, the rings 112 and 113 contact like rings on adjacent bottles and prevent scuffing and rubbing of the printed label on section 102. This provides significant protection for the label, which is of prime importance to the retailer. Thus the advantages of the present invention include good nestability when shipping the container components prior to fabrication of the containers. A further advantage is the stackability of the filled containers in the retailing location. A third advantage is the increase in hoop strength gained through the spinwelded joints in the wall of the container and another advantage is the projecting roll rings providing protection of decorative labels on the containers.

Another particular advantage of the present invention is that it allows manufacture of the various components by different methods in order to obtain the optimum characteristics of each particular component. For example, whereas the tops and bottoms were described as being manufactured by various techniques to provide optimum strength and barrier characteristics and whereas the center section was described as being manufactured by various techniques for providing improved orientation and barrier characteristics, aditional qualitites can also be achieved in the finished container. For instance the spin-welding at the top and bottom of the tubular central section provides increased hoop strength for the entire container as well as providing a pair of parallel roll-rims to protect any label which is attached to the central section. Furthermore, the provision of an elongated central section provides a maximum surface area for receiving the advertising label for the food or beverage manufacturer who is filling the container. This is known as "optimizing the billboard space" on the container. The present invention provides more billboard space for the label than any known conventional bottle-type container used to package beverages.

In addition to the optimal billboard space, the present invention also provides opportunities for improving the outer surface of the container for receiving printed and/or painted labeling. For example, when the central tubular section 102 is formed by coextrusion, one of the layers of the coextruded cylinder, i.e. the outermost layer may be made of a white opaque semi-porous material such as polystyrene, high impact polystyrene, polyvinylchloride, or polypropylene, which provides a highly desirable surface for the printing of bright vivid label colors thereon with conventional label printing methods.

The top portion 103 of the bottle may be formed of a clear tough material such as PET which is attractive to the consumer and offers a clear display of the contents of the bottle. Likewise the bottom section 104 may be selected of an optimum material to provide the characteristics desired by the container filler. A relatively low cost material such as polystyrene or high impact polystyrene could be utilized for bottom portion 104 to conserve cost in the finished container. All of these substitutions of materials of course depend primarily on the compatibility of spin-welding the various components together. For example, the contacting surfaces in the outer flanges of the top 103 and the bottom 104 must be

17

compatible for spin-welding with the outer and inner surfaces of the cylindrical wall portion 101. Those materials which are compatible for spinwelding are known to ones skilled in the art and substitutions can be made accordingly.

Whereas the foregoing description is related to the forming of bottles by the methods of the present invention one could also utilize the techniques disclosed herein to form what is termed in the beverage and food industry as "single-serving cans". This could be achieved by substituting for the top section 103 a plastic closure such as that disclosed in copending patent application S.N. 456,165, filed Janaury 6, 1983, by Vincent E. Fortuna entitled "Closures for Containers Having Plastic Tops", which application is assigned to the assignee of this application. Said Vincent E. Fortuna application is hereby incorporated by reference in its entirety into the present application.

Thus, referring to the Figures of the incorporated Fortuna application, the closures illustrated at 101, 201, 301, and 401, all are particularly advantageous for use as closures for beverage cans. More particularly these closures would be highly desirable for use with the three-piece beverage container disclosed in this specification to form a single serving can. One of the aforementioned tops can be spin-welded to the cylindrical tube of the present disclosure in place of the disclosed upper portion 103. The method of attaching the Fortuna can closures is substantially identical to the

18

method of attaching the bottle portion 103, i.e. spin-welding the can closure to the cylindrical body portion 102. The Fortuna can closures mentioned above all offer the advantage of a U-shaped spin-welding flange at the outer periphery compatible with the spin-welding techniques for forming the present invention. Thus it is clear that the closures disclosed in the incorporated application clearly would be adaptable to the present invention for forming cans rather than bottles.

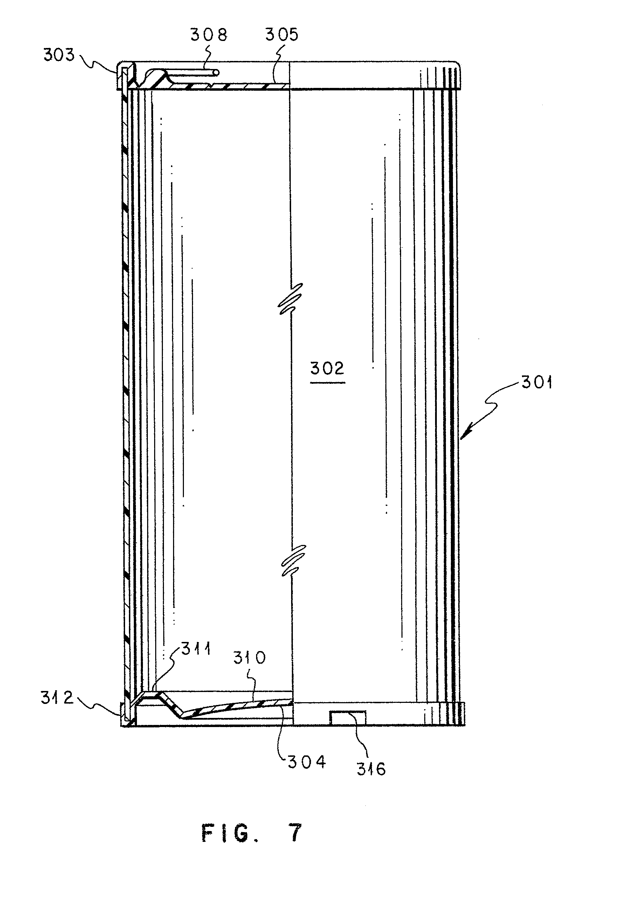

Figure 7 illustrates in half cross-sectional side view a can 301 manufactured according to this invention. Can 301 comprises a coextruded, barriered, multi-layered cylindrical body 302 to which a relatively flat disc-like bottom 304 has been friction-welded. Bottom 304 utilizes a U-shaped peripheral flange 312 for snug-fitting engagement on body 302. Usually this will be an interference fit to provide excellent friction-welding conditions. Bottom 304 further comprises nesting channel 311, domed section 310, and one or more alignment notches 316.

After bottom 304 is friction-welded to the cylindrical can body 302, the material contents of the container are placed therein by known and conventional filling techniques. After filling, the can is closed by friction-welding a relatively flat closure top 305 thereon. This is achieved, even when the can contains liquid contents which would normally prevent friction-welding, by having a downwardly-facing U-shaped welding flange 303 formed on closure 305. Flange 303 has an outer peripheral rim adapted for close-fitting engagment with the outer wall of can body 302 to establish a friction-welding zone displaced away from the liquid contents of the container. Preferably the fit between the peripheral flange and the can body is a slight interference fit for best results.

Figure 6 illustrates one embodiment of the layered container body 102, 302, in which a central layer 401 of a highly gas-impermeable material such as Saran or Barex is sandwiched between an outer layer 402 and an inner layer 403 both formed of a good container polymer such as polyethylene terephthalate (PET), polypropylene, polyethylene, polyvinylchloride (PVC), polystyrene, or others. Layers 402 and 403 do not necessarily have to be of the same material. For example, the outer layer 402 could be polystyrene which is relatively inexpensive and has superior properties for printing and coloring; and the inner layer could be PET which has very good oriented strength plus fairly good impermeability to $CO_2$ and oxygen to supplement the barrier layer 401.

In addition, incompatible polymer layers could be used by adding a layer of adhesive such as duPont's CXA between each of the sandwich layers. This can be achieved by coextruding the tube 302 from a five-layer, three-extruder, coextrusion die. One extruder supplies a molten central barrier layer to the die and a second extruder supplies a split-stream of molten adhesive to the die where it is "layed down" on both sides of the barrier polymer. A third extruder provides molten polymer in two streams which are layed down on the adhesive layers in the coextrusion die. The result is a five-layered tube utilizing three different materials in the wall. If it is desirable to make layer 402 of a different material from

20

layer 403, an additional extruder must be tied in to the coextrusion die.

Although a cylindrical can is described herein with circular spin-welded ends, one can utilize the present invention with non-circular can bodies and ends by utilizing oscillatory friction-welding techniques to attach the ends to the body rather than the rotary spin-welding technique disclosed.  Oscillatory bonding is more particularly described in copending application S.N. 371,363, filed April 23, 1982, for "Method of Oscillatory Bonding", by Donald MacLaughlin and Vincent Fortuna.

Although a specific preferred embodiment of the present invention has been described in the detailed description above, the description is not intended to limit the invention to the particular forms or embodiments disclosed therein since they are to be recognized as illustrative rather than restrictive and it will be obvious to those skilled in the art that the invention is not so limited.  Thus the invention is declared to cover all changes and modifications of the specific example of the invention herein disclosed for purposes of illustration, which do not constitute departures from the spirit and scope of the invention.  The embodiments of the invention in which an exclusive property or privilege is claimed are defined as follows:

- 21 -

CLAIMS:

1. A thermoplastic container, at least a portion of which comprises a barriered polymeric material, said container being manufactured by the process comprising:

forming from a thermoplastic polymer a top section having an openable closure thereon;

forming a tubular body section from a coextruded polymeric material having at least one layer of a strong plastic to which is adhered at least one layer of a barrier plastic;

forming a container bottom section from a compatible thermoplastic material arranged for snug-fitting engagement with said body section; and,

friction-welding at least one of said bottom and top sections to said body section.

2. A container as claimed in claim 1, wherein said container is a generally circular cylinder and said friction-welding comprises spin-welding.

3. A container as claimed in claim 2, wherein said container comprises a can having a relatively flat top closure with tear-open tab means formed thereon.

4. A container as claimed in claim 1, 2 or 3, wherein said body portion comprises an outer layer and an inner layer each made from a polymer selected from the group comprising PET, PVC, polystyrene, polypropylene, and polyethylene, and a barrier layer between said inner and outer layers selected from the group comprising ethylene vinyl alcohol, polyvinyl alcohol, styrene acrylonitrile, and polyvinylidene chloride.

5. A container as claimed in any one of the preceding claims, wherein at least one of said sections attached to said body section is formed of a multi-layered barriered polymer material and is thermoformed from a coextruded sheet of said material.

6. A container as claimed in claim 1, wherein said container is a bottle having an upwardly extending top section having a narrowed neck portion, a peripheral fill-ring, and means on said ring for engagement with a friction-welding mandrel.

7. A container as claimed in claim 3, wherein said bottle sections are circular cylindrical and are joined together by rotary spinwelding.

8. A composite thermoplastic can comprising:
   a tubular multilayered body section made up of at least one layer of a polymer material adhered to at least one layer of a barrier material;
   a thermoplastic bottom closure sealingly attached to the bottom end of said body section by friction-welding; and,
   a thermoplastic top closure sealingly attached to the top of said body section by friction-welding.

9. A composite can as claimed in claim 8, wherein said body section is cylindrical and said closures are spin-welded thereon.

10. A composite can as claimed in claim 8 or 9, wherein said body section is a coextruded tube.

11. A composite can as claimed in claim 8 or 9, wherein said body section is a coextruded cylindrical tube having at least three layers, one of which is a barrier layer.

12.    A composite can as claimed in claim 8 or 9, wherein said body section is a coextruded cylindrical tube comprising an inner and outer layer of structural polymer material between which is located a layer of a barrier polymer.

13.    The composite can of claim 12, wherein said inner and outer layers are each selected from the group of polymers consisting of PET, PVC, polystyrene, polypropylene, polyethylene and nylon; and said barrier layer consists of a polymer selected from the group of ethylene vinyl alcohol, polyvinyl alcohol, styrene acrylonitrile, and polyvinylidene chloride.

14.    A composite can as claimed in any one of claims 8 to 13, wherein at least one of said closures comprises a multi-layered polymer having a structural layer and a barrier polymer layer.

15.    A composite can as claimed in claim 14, wherein at least one closure is formed from a coextruded polymer sheet by thermoforming.

16.    A thermoplastic bottle having improved shipping characteristics and improved gas impermeability said bottle comprising:

an upper bottle section comprising a lower skirt section having a friction-welding flange formed thereon and a narrowed, upwardly extending neck portion defining a pour opening, said upper bottle section formed of a thermoplastic container polymer;

a central tubular body portion formed from a multi-layered, coextruded barriered tube of thermoplastic polymers, and adapted for snug-fitting engagement with said flange;

a bottom closure comprising a peripheral spin-welding flange and a relatively flat central portion, said flange adapted for friction-welding to said body portion.

- 24 -

17.    A bottle as claimed in claim 16, wherein said central body portion comprises a circular cylinder having an inner and an outer layer each made of a polymer selected from the group comprising PET, PVC, polystyrene, and polypropylene, and an inner barrier layer selected from the group comprising polyvinyl alcohols, ethylene vinyl alcohol, polyvinylidene chloride, and styreneacrylonitrile.

18.    A bottle as claimed in claim 17, wherein said barriered body portion is a coextruded cylindrical tube.

19.    A bottle as claimed in claim 18, wherein at least one of said sections attached to said body portion is formed by thermoforming.

20.    A bottle as claimed in claim 16, 17 or 18, wherein at least one of said upper bottle section and said bottom closure comprises a multi-layered barriered polymer.

21.    A bottle as claimed in any one of claims 16 to 20, wherein at least one of said sections attached to said body portion is spinwelded thereto.

1/3

Fig. 4

Fig. 6

Fig. 1

Fig. 2

103

113

103

Fig. 3

104

112

104

Fig. 5

210

115

107

213

102

204

211

212

109

FIG. 7